# EUROPEAN PATENT SPECIFICATION

(11) **EP 3 106 509 B1**
(45) Date of publication and mention of the grant of the patent: **18.09.2019**
(21) Application number: 15172464.8
(22) Date of filing: 17.06.2015
(51) Int. Cl.: C12G 3/04

(54) **ALCOHOLIC DRINK COMPOSITION HAVING FUNCTIONALITY TO SHORTEN DRUNKENNESS TIME**
ALKOHOLISCHE GETRÄNKEZUSAMMENSETZUNG MIT FUNKTIONALITÄT ZUR VERKÜRZUNG DER TRUNKENHEITSDAUER
COMPOSITION DE BOISSON ALCOOLISÉE AYANT UNE FONCTIONNALITÉ PERMETTANT DE RACCOURCIR LA DURÉE DE L'ÉTAT D'ÉBRIÉTÉ

(43) Date of publication of application: 21.12.2016
(73) Proprietor: Gold NanoTech, Inc., 114 Taipei (TW)
(72) Inventor: Ying-Chen, Yang, 110 Taipei City (TW); Chia-Nan, Chen, 241 New Taipei City (TW)
(74) Representative: Cabinet Chaillot

(56) References cited:
- WO-A1-97/15200
- WO-A1-2012/022375
- CN-A- 104 371 903
- DE-C1- 19 728 090
- KR-A- 20020 068 230
- US-A1- 2009 186 143

## Description

### BACKGROUND OF THE INVENTION

### 1. Field of the Invention

The present invention relates to the technology field of alcoholic drink compositions, and more particularly to an alcoholic drink composition having functionality to shorten drunkenness time.

### 2. Description of the Prior Art

Wine (or alcohol) is undoubtedly a very important drink ordinarily used in an occasion on which people can assemble for social interaction or treat their customers with corporate hospitality. However, in spite of drinking white spirit, grape wine, beer, sorghum, or other liquors, people should be moderate and healthy in drinking.

During social interaction, some people often get drunk because of having tolerance for alcohol. Because the drunken people would subject to some drunken symptoms such as hangover, headache, nausea, vomiting, thirst, shivering, dizziness, and muscle cramps, a variety of commercial anti-alcoholic products are proposed, for example, an anti-alcoholic ingredient made of ginseng and poria. For example, a KOREAN patent with publication number of KR 20020068230A has disclosed a ginseng wine, wherein the ginseng wine consists of:
a Ginseng wine, comprising SAKE (ABV=12-17%) and 1-5 sticks of Ginsengs;
pure gold fragments, mixed into the Ginseng wine by 0.05 wt%; and
an arrowroot juice (100%), added into the Ginseng wine containing the pure gold fragments by 20-40 mL.

The inventors of the KOREAN patent declares that the ginseng wine is helpful to alleviate or ease hangover and headache. However, the ginseng wine is not helpful to shorten the drinker's drunkenness time.

After completing researches and studies, experts and scholars find that the commercial anti-alcoholic products are mostly made by using Chinese herbologies as the raw materials. Moreover, experts and scholars also find that most of the anti-alcoholic products cannot perform effectively anti-alcoholic efficacy because of including insufficient dosage of Chinese medicinal materials or other reasons. In fact, these commercial anti-alcoholic products can merely supply nutrients to human liver for enhancing liver's functionalities after the alcohol is metabolized by the liver. Differing from the KOREAN patent, a CHINA patent publication number of CN 104371903 A has disclosed a liquor beverage consists of:
an alcohol;
a plurality of gold flakes formed by a plurality of gold nanoparticles, added into the alcohol by a specific formula proportion ranged from 20 ppm to 105 ppm.

The inventors of the CHINA patent declares that the liquor beverage containing the gold flakes is helpful to control TG value of human liver. However, the liquor beverage containing the gold flakes is not helpful to shorten the drinker's drunkenness time.

Accordingly, in view of the commercial anti-alcoholic products cannot solve the drunken symptoms effectively and immediately, the inventor of the present application has made great efforts to make inventive research thereon and eventually provided an alcoholic drink composition having functionality to shorten drunkenness time.

### SUMMARY OF THE INVENTION

The primary objective of the present invention is to provide an alcoholic drink composition having functionality to shorten drunkenness time, wherein the alcoholic drink composition defined by claim 1 is fabricated by mixing a plurality of gold flakes into an alcoholic drink with a specific mix ration. Taking sorghum liquor as an exemplary alcoholic drink composition, wherein the gold flakes are mixed into the sorghum liquor by the mix ratio ranged between 6.6 mg/600mL and 66 mg/600mL. Therefore, when a user drinks the sorghum liquor mixed with the gold flakes, the user would sober up after a longest drunkenness time of 59 minutes passed, without additionally taking any other anti-alcoholic products.

Accordingly, in order to achieve the primary objective of the present invention, the inventor of the present invention provides a first embodiment for the alcoholic drink composition having functionality to shorten drunkenness time, comprising an alcohol drink and a plurality of gold flakes formed by a plurality of gold nanoparticles, wherein the gold flakes are mixed into the alcohol drink by a specific mix ratio, and the specific mix ratio is ranged between 6.6 mg/600mL to 66 mg/600mL.

According to the first embodiment of the aforesaid alcoholic drink composition having functionality to shorten drunkenness time, wherein the manufacturing material of the alcohol drink can be grain, cereal, wheat, or fruit.

According to the first embodiment of the aforesaid alcoholic drink composition having functionality to shorten drunkenness time, wherein the gold nanoparticles have a specific dimension size ranged between 2 nm and 30 nm, and the gold flakes have a specific thickness ranged between 20 nm and 100 nm.

Moreover, for achieving the primary objective of the present invention, the inventor of the present invention provides a second embodiment for the alcoholic drink composition having functionality to shorten drunkenness time, comprising an alcohol drink and a colloidal gold formed by a plurality of gold nanoparticles, wherein the colloidal gold and the alcohol drink have a specific mix ratio, and the specific mix ratio is ranged from 50:1 to 50:10.

According to the second embodiment of the aforesaid alcoholic drink composition having functionality to shorten drunkenness time, wherein the manufacturing material of the alcohol drink can be grain, cereal, wheat, or fruit.

According to the second embodiment of the aforesaid alcoholic drink composition having functionality to shorten drunkenness time, wherein the gold nanoparticles have a specific dimension size ranged between 2 nm and 30 nm.

### BRIEF DESCRIPTION OF THE DRAWINGS

The invention as well as a preferred mode of use and advantages thereof will be best understood by referring to the following detailed description of an illustrative embodiment in conjunction with the accompanying drawings, wherein:
FIG. 1 is a statistical bar graph of drunkenness time versus brandy dosage;
FIG. 2 is a statistical bar graph of drunkenness time versus experimental groups;
FIG. 3 is a statistical bar graph of total error times versus experimental groups;
FIG. 4 is a statistical bar graph of drunkenness time versus whisky dosage;
FIG. 5 is a statistical bar graph of drunkenness time versus experimental groups;
FIG. 6 is a statistical bar graph of total error times versus experimental groups;
FIG. 7 is a statistical bar graph of drunkenness time versus sorghum liquor dosage;
FIG. 8 is a statistical bar graph of drunkenness time versus experimental groups;
FIG. 9 is a statistical bar graph of total error times versus experimental groups;
FIG. 10 is a statistical bar graph of drunkenness time versus Luzhou-flavor liquor dosage;
FIG. 11 is a statistical bar graph of drunkenness time versus experimental groups;
FIG. 12 is a statistical bar graph of total error times versus experimental groups;
FIG. 13 is a statistical bar graph of drunkenness time versus Maotai liquor dosage;
FIG. 14 is a statistical bar graph of drunkenness time versus experimental groups;
FIG. 15 is a statistical bar graph of total error times versus experimental groups;
FIG. 16 is a statistical bar graph of drunkenness time versus Shaoxing liquor dosage;
FIG. 17 is a statistical bar graph of drunkenness time versus experimental groups;
FIG. 18 is a statistical bar graph of total error times versus experimental groups.

### DETAILED DESCRIPTION OF THE PREFERRED EMBODIMENTS

To more clearly describe an alcoholic drink composition having functionality to shorten drunkenness time according to the present invention, embodiments of the present invention will be described in detail with reference to the attached drawings hereinafter.

The present invention provides an alcoholic drink composition having functionality to shorten drunkenness time, which consists of an alcohol drink and a plurality of gold flakes formed by a plurality of gold nanoparticles. Wherein the aforesaid alcohol drink can be liquor brewed from grain, cereal, wheat, or fruit. Moreover, the gold flakes mixed into the alcohol drink have a specific mix ratio, and the specific mix ratio is ranged between 6.6 mg/600mL to 66 mg/600mL.

Particularly, the present invention applies physical vapor deposition (PVD) technology to fabricate the aforesaid gold nanoparticles by using 99.99% pure gold are raw materials, and then the fabricated gold nanoparticles are stacked for making the gold molecules be filled into the gaps between the gold nanoparticles, such that the gold nanoparticles are processed to a plurality of gold flakes. Therefore, the alcoholic drink composition having functionality to shorten drunkenness time of the present invention can be eventually obtained after mixing the gold flakes into the alcohol drink by a specific mix ration ranged between 6.6 mg/600mL∼66 mg/600mL.

Although above descriptions introduce that the said alcoholic drink composition can be made by mixing the gold flakes into any one kind of alcohol drink, that cannot used for limiting the practical embodiment of the alcoholic drink composition. In practicable embodiments, the alcoholic drink composition having functionality to shorten drunkenness time of the present invention can also be made by mixing a colloidal gold into the alcohol drink, wherein the colloidal gold is formed by a plurality of gold nanoparticles. Moreover, the colloidal gold and the alcohol drink have a specific mix ratio, and the specific mix ratio is ranged from 50:1 to 50:10. Similarly, the gold nanoparticles used for forming the colloidal gold are also fabricated through the PVD technology by using 99.99% pure gold are raw materials.

In order to prove that the alcohol drink composition indeed includes the functionality to shorten the drunkenness time, several experiments have been completed by the inventors and a variety of experiment data will be presented in following paragraphs.

### [First Experiment]

First of all, for carrying out a first experiment, the inventor of the present invention takes the Godet brandy made by using grapes as raw material to be the alcohol drink, wherein the alcohol by volume (ABV) of the brandy is 42%. Moreover, in the first experiment, 10-week old ICR (Institute of Cancer Research) rats are selected to be test animals, and the rats are divided into 5 groups by 8 rats per group. The 5 groups are as follows:
(1) Control (C) group: the rats in C group are fed with 250µl pure water by using rat feeding tubes.
(2) Brandy (B) group: the rats in B group are fed with 250µl brandy by using rat feeding tubes.
(3) 1-fold dose (BLG) group: the rats in BLG group are fed with a BLG test sample of 250µl by using rat feeding tubes. To obtain the BLG test sample, an alcohol drink of 600ml brandy is firstly mixed with 6.6 mg gold flakes, and then the mixture is stirred for 1 hour. So that, the BLG test sample used in BLG group contains the gold flakes of 6.6 mg/600mL.
(4) 3-fold dose (BMG) group: the rats in BMG group are fed with a BMG test sample of 250µl by using rat feeding tubes. For fabricating the BMG test sample, 19.8 mg gold flakes are mixed into an alcohol drink of 600ml brandy, and then the mixture is stirred for 1 hour. So that, the BMG test sample used in BMG group contains the gold flakes of 19.8 mg/600mL.
(5) 6-fold dose (BHG) group: the rats in BHG group are fed with a BHG test sample of 250µl by using rat feeding tubes. To obtain the BHG test sample, an alcohol drink of 600ml brandy is firstly mixed with 39.6 mg gold flakes, and then the mixture is stirred for 1 hour. So that, the BHG test sample used in BHG group contains the gold flakes of 39.6 mg/600mL.

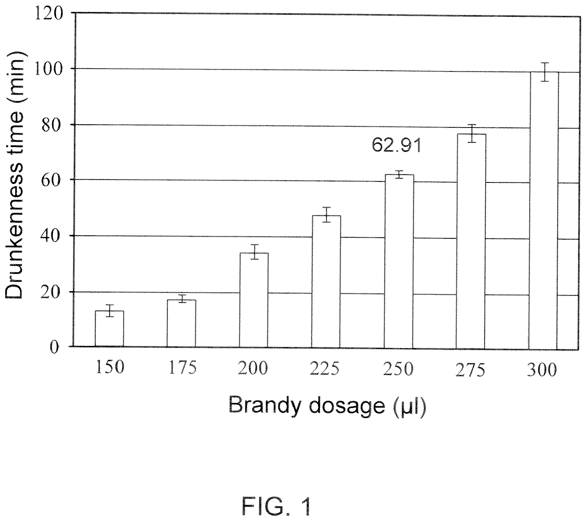

Several rats are fed with different dosages of brandy before starting the formal experiment, such that a statistical bar graph of drunkenness time versus brandy dosage is therefore produced in FIG. 1. As FIG. 1 shows, the drunkenness time of test rats raises with the increase of the fed brandy dosage. Therefore, according to the statistical bar graph, the dose for the test sample used in first experiment is set to 250µl; wherein the average drunkenness time of the rats fed with 250µl brandy is 62.91±1.35 min. During the formal experiment, the rats in each of the aforesaid groups are fed with the corresponding test samples of 250µl. Then, in order to determine the drunkenness time of rats in each of the groups, the rats are put on a balance beam for completing a beam-balance test, respectively. Therefore, the errors (overturn and/or misstep) occurring as the rats walk along the balance beam can be counted and recorded.

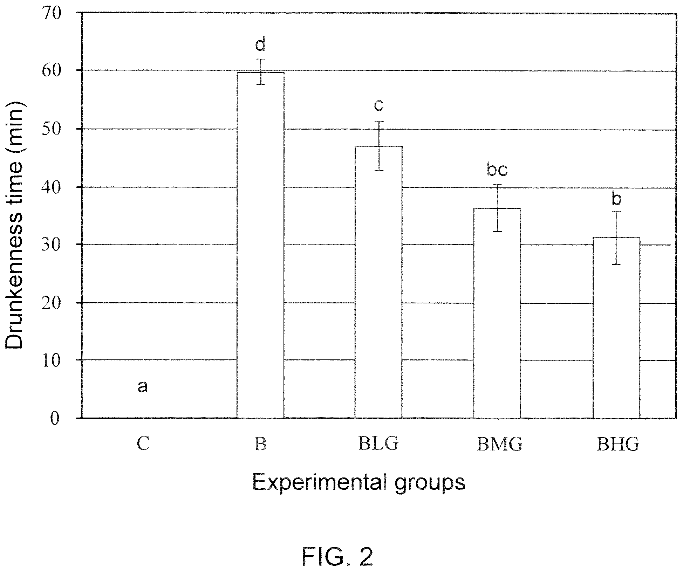

Please refer to FIG. 2, there is shown a statistical bar graph of drunkenness time versus experimental groups. As FIG. 2 shows, the drunkenness time of the rats in BLG group, BMG group and BHG group are obviously less than the drunkenness time of the rats in B group. Thus, the experimental results coming from FIG. 2 has proved that, the rats fed with the alcohol drink composition of BLG group would sober up after a longest drunkenness time of 48 minutes has been passed.

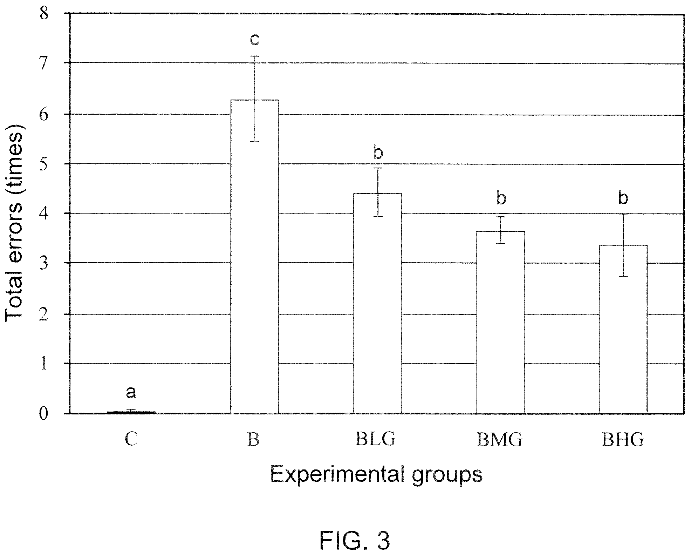

In addition, please refer to FIG. 3, where a statistical bar graph of total errors versus experimental groups is shown. From FIG. 3, it can easily find that, the performances on the total errors (overturn + misstep) presented by the rats in BLG group, BMG group and BHG group are obviously superior to the rats in B group. Therefore, the experimental results of the beam-balance test has proved that, the rats fed with the alcohol drink composition of BLG group, BMG group and BHG group can still perform good dynamic-balance ability.

### [Second Experiment]

After finishing the first experiment, the inventor of the present invention continuously takes the TTL (Taiwan Tobacco & Liquor Corporation) whisky made by using single malt as raw material to be the alcohol drink in order to carry out a second experiment. Herein, it needs to further explain that the alcohol by volume (ABV) of the whisky is 40%.

The same to above-presented first experiment, 10-week old ICR rats are selected to be test animals in the second experiment, and the rats are divided into 5 groups by 8 rats per group. The 5 groups are as follows:
(1) Control (C) group: the rats in C group are fed with 250µl pure water by using rat feeding tubes.
(2) Whisky (W) group: the rats in W group are fed with 250µl Whisky by using rat feeding tubes.
(3) 1-fold dose (WLG) group: the rats in WLG group are fed with a WLG test sample of 250µl by using rat feeding tubes. To obtain the WLG test sample, an alcohol drink of 600ml whisky is firstly mixed with 6.6 mg gold flakes, and then the mixture is stirred for 1 hour. So that, the WLG test sample used in WLG group contains the gold flakes of 6.6 mg/600mL.
(4) 3-fold dose (WMG) group: the rats in WMG group are fed with a WMG test sample of 250µl by using rat feeding tubes. For fabricating the WMG test sample, 19.8 mg gold flakes are mixed into an alcohol drink of 600ml whisky, and then the mixture is stirred for 1 hour. So that, the WMG test sample used in WMG group contains the gold flakes of 19.8 mg/600mL.
(5) 6-fold dose (WHG) group: the rats in WHG group are fed with a WHG test sample of 250µl by using rat feeding tubes. To obtain the WHG test sample, an alcohol drink of 600ml whisky is firstly mixed with 39.6 mg gold flakes, and then the mixture is stirred for 1 hour. So that, the WHG test sample used in WHG group contains the gold flakes of 39.6 mg/600mL.

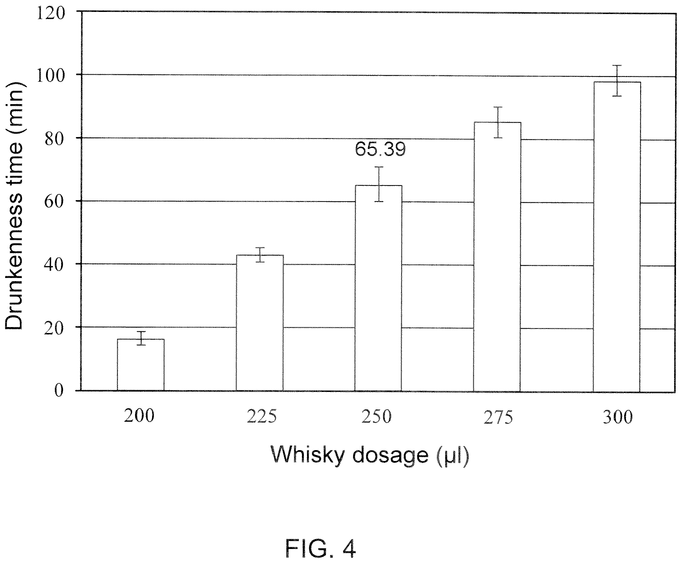

Several rats are fed with different dosages of whisky before starting the formal experiment, such that a statistical bar graph of drunkenness time versus whisky dosage is therefore produced in FIG. 4. As FIG. 4 shows, the drunkenness time of test rats raises with the increase of the fed whisky dosage. Therefore, according to the statistical bar graph, the dose for the test sample used in second experiment is set to 250µl; wherein the average drunkenness time of the rats fed with 250µl whisky is 65.39±5.55 min. During the second experiment, the rats in each of the aforesaid groups are fed with the corresponding test samples of 250µl. Then, in order to determine the drunkenness time of rats in each of the groups, the rats are put on a balance beam for completing a beam-balance test, respectively. Therefore, the errors (overturn and/or misstep) occurring as the rats walk along the balance beam can be counted and recorded.

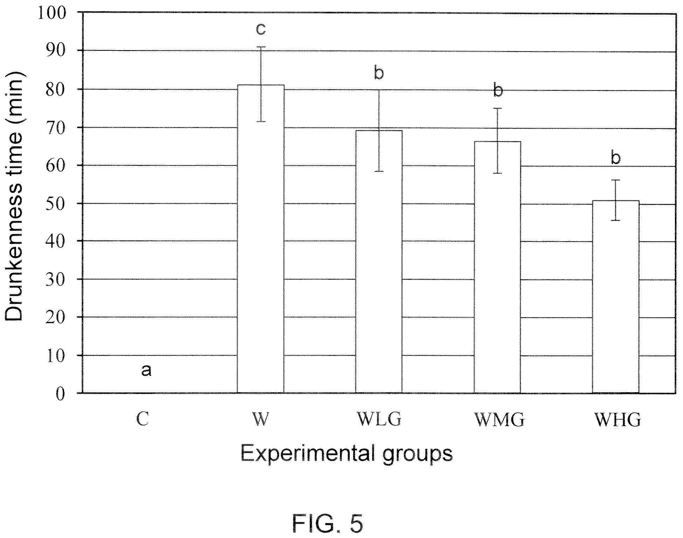

Please refer to FIG. 5, there is shown a statistical bar graph of drunkenness time versus experimental groups. As FIG. 5 shows, the drunkenness time of the rats in WLG group, WMG group and WHG group are obviously less than the drunkenness time of the rats in W group. Thus, the experimental results coming from FIG. 5 has proved that, the rats fed with the alcohol drink composition of WLG group would sober up after a longest drunkenness time of 69 minutes has been passed.

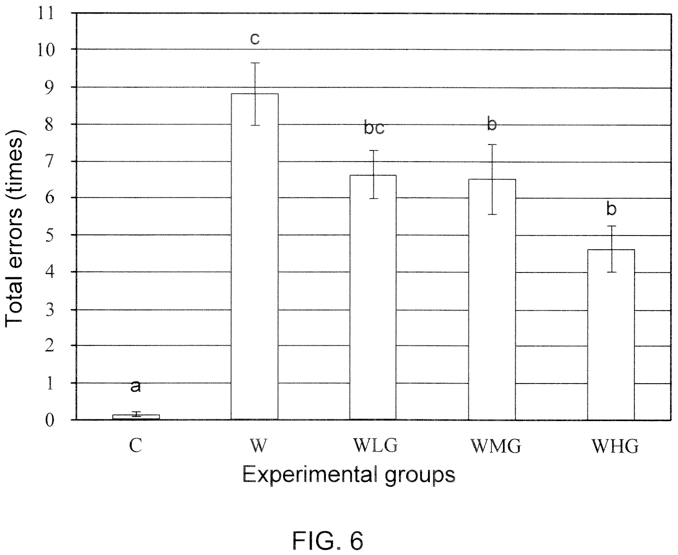

In addition, please refer to FIG. 6, where a statistical bar graph of total errors versus experimental groups is shown. From FIG. 6, it can easily find that, the performances on the total errors (overturn + misstep) presented by the rats in WLG group, WMG group and WHG group are obviously superior to the rats in W group. Therefore, the experimental results of the beam-balance test has proved that, the rats fed with the alcohol drink composition of WLG group, WMG group and WHG group can still perform good dynamic-balance ability.

### [Third Experiment]

After finishing the second experiment, the inventor of the present invention continuously takes the TTL (Taiwan Tobacco & Liquor Corporation) sorghum liquor made by using single malt as raw material to be the alcohol drink in order to carry out a third experiment. Herein, it needs to further explain that the alcohol by volume (ABV) of the sorghum liquor is 58%.

The same to above-presented experiments, 10-week old ICR rats are selected to be test animals in the third experiment, and the rats are divided into 5 groups by 8 rats per group. The 5 groups are as follows:
(1) Control (C) group: the rats in C group are fed with 175µl pure water by using rat feeding tubes.
(2) Sorghum liquor (S) group: the rats in S group are fed with 175µl sorghum liquor by using rat feeding tubes.
(3) 1-fold dose (SLG) group: the rats in SLG group are fed with a SLG test sample of 175µl by using rat feeding tubes. To obtain the SLG test sample, an alcohol drink of 600ml sorghum liquor is firstly mixed with 6.6 mg gold flakes, and then the mixture is stirred for 1 hour. So that, the SLG test sample used in SLG group contains the gold flakes of 6.6 mg/600mL.
(4) 3-fold dose (SMG) group: the rats in SMG group are fed with a SMG test sample of 175µl by using rat feeding tubes. For fabricating the SMG test sample, 19.8 mg gold flakes are mixed into an alcohol drink of 600ml sorghum liquor, and then the mixture is stirred for 1 hour. So that, the SMG test sample used in SMG group contains the gold flakes of 19.8 mg/600mL.
(5) 6-fold dose (SHG) group: the rats in SHG group are fed with a SHG test sample of 175µl by using rat feeding tubes. To obtain the SHG test sample, an alcohol drink of 600ml sorghum liquor is firstly mixed with 39.6 mg gold flakes, and then the mixture is stirred for 1 hour. So that, the SHG test sample used in SHG group contains the gold flakes of 39.6 mg/600mL.

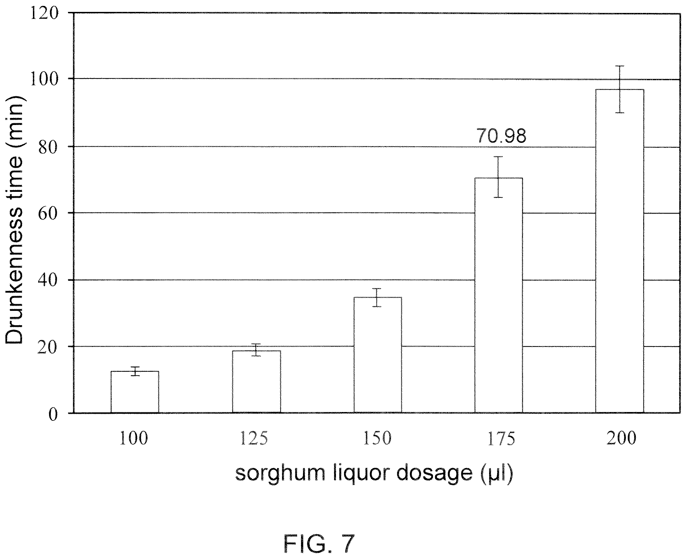

Several rats are fed with different dosages of sorghum liquor before starting the formal experiment, such that a statistical bar graph of drunkenness time versus sorghum liquor dosage is therefore produced in FIG. 7. As FIG. 7 shows, the drunkenness time of test rats raises with the increase of the fed sorghum liquor dosage. Therefore, according to the statistical bar graph, the dose for the test sample used in third experiment is set to 175µl; wherein the average drunkenness time of the rats fed with 175µl sorghum liquor is 70.98±6.12 min. During the third experiment, the rats in each of the aforesaid groups are fed with the corresponding test samples of 175µl. Then, in order to determine the drunkenness time of rats in each of the groups, the rats are put on a balance beam for completing a beam-balance test, respectively. Therefore, the errors (overturn and/or misstep) occurring as the rats walk along the balance beam can be counted and recorded.

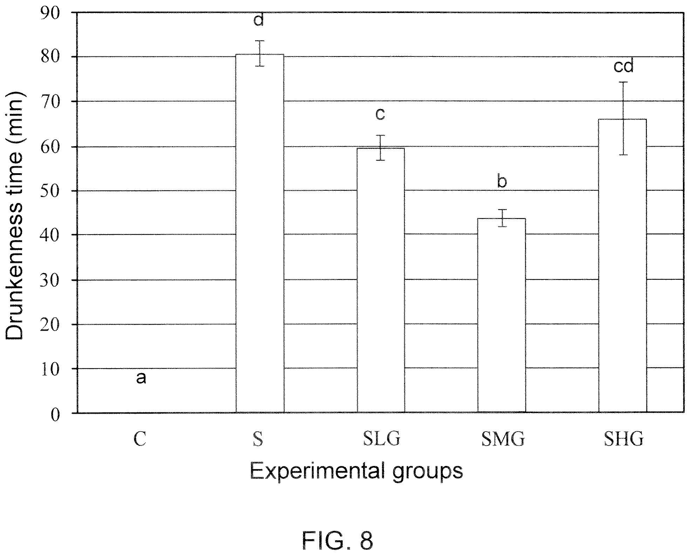

Please refer to FIG. 8, there is shown a statistical bar graph of drunkenness time versus experimental groups. As FIG. 8 shows, the drunkenness time of the rats in SLG group, SMG group and SHG group are obviously less than the drunkenness time of the rats in S group. Thus, the experimental results coming from FIG. 8 has proved that, the rats fed with the alcohol drink composition of SLG group would sober up after a longest drunkenness time of 59 minutes has been passed. Herein, it needs to explain that, because the data trend of the S group, SLG group, SMG group and SHG group is different from the data trend of the B group, BLG group, BMG group and BHG group in FIG. 2 as well as the data trend of the W group, WLG group, WMG group and WHG group in FIG. 5, the experimental data for the SHG group in FIG. 8 can be assumed to an error data.

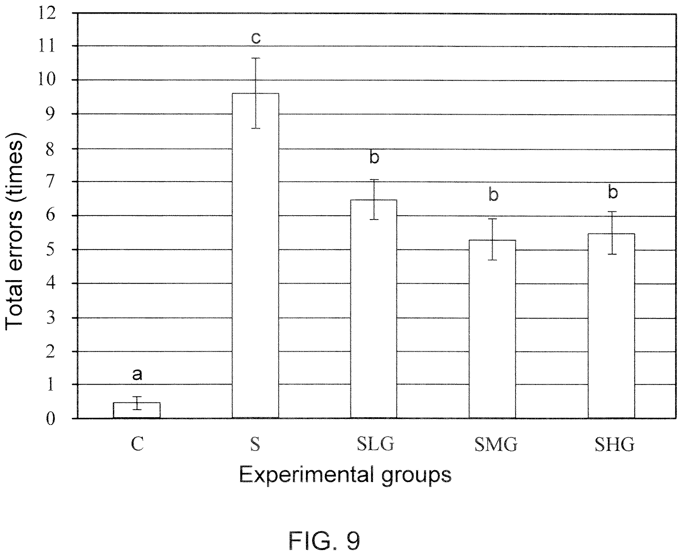

In addition, please refer to FIG. 9, where a statistical bar graph of total errors versus experimental groups is shown. From FIG. 9, it can easily find that, the performances on the total errors (overturn + misstep) presented by the rats in SLG group, SMG group and SHG group are obviously superior to the rats in S group. Therefore, the experimental results of the beam-balance test has proved that, the rats fed with the alcohol drink composition of SLG group, SMG group and SHG group can still perform good dynamic-balance ability.

### [Fourth Experiment]

After finishing the third experiment, the inventor of the present invention continuously takes the Luzhou-flavor liquor made by using wheat and sorghum as raw material to be the alcohol drink in order to carry out a third experiment. Herein, it needs to further explain that the Luzhou-flavor liquor comes from Shahe Winery located in Anhui of China, and the alcohol by volume (ABV) of the Luzhou-flavor liquor is 50%.

The same to above-presented experiments, 10-week old ICR rats are selected to be test animals in the fourth experiment, and the rats are divided into 5 groups by 8 rats per group. The 5 groups are as follows:
(1) Control (C) group: the rats in C group are fed with 200µl pure water by using rat feeding tubes.
(2) Luzhou-flavor liquor (L) group: the rats in L group are fed with 200µl Luzhou-flavor liquor by using rat feeding tubes.
(3) 1-fold dose (LLG) group: the rats in LLG group are fed with a LLG test sample of 200µl by using rat feeding tubes. To obtain the LLG test sample, an alcohol drink of 600ml Luzhou-flavor liquor is firstly mixed with 6.6 mg gold flakes, and then the mixture is stirred for 1 hour. So that, the LLG test sample used in LLG group contains the gold flakes of 6.6 mg/600mL.
(4) 3-fold dose (LMG) group: the rats in LMG group are fed with a LMG test sample of 200µl by using rat feeding tubes. For fabricating the LMG test sample, 19.8 mg gold flakes are mixed into an alcohol drink of 600ml Luzhou-flavor liquor, and then the mixture is stirred for 1 hour. So that, the LMG test sample used in LMG group contains the gold flakes of 19.8 mg/600mL.
(5) 6-fold dose (LHG) group: the rats in LHG group are fed with a LHG test sample of 200µl by using rat feeding tubes. To obtain the LHG test sample, an alcohol drink of 600ml Luzhou-flavor liquor is firstly mixed with 39.6 mg gold flakes, and then the mixture is stirred for 1 hour. So that, the LHG test sample used in LHG group contains the gold flakes of 39.6 mg/600mL.

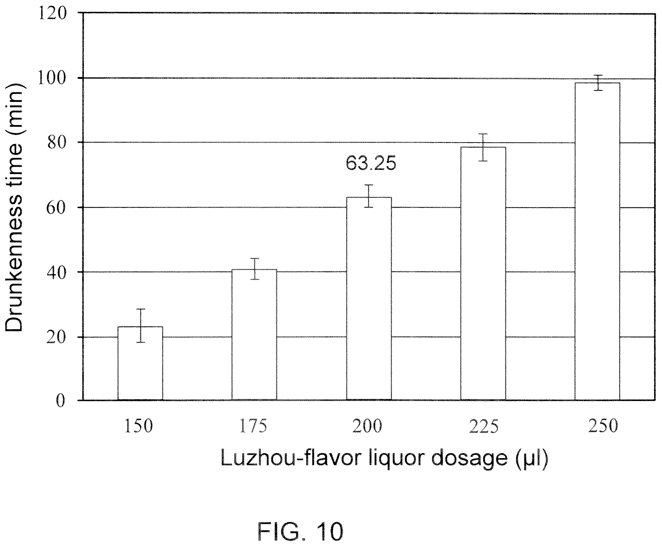

Several rats are fed with different dosages of Luzhou-flavor liquor before starting the formal experiment, such that a statistical bar graph of drunkenness time versus Luzhou-flavor liquor dosage is therefore produced in FIG. 10. As FIG. 10 shows, the drunkenness time of test rats raises with the increase of the fed Luzhou-flavor liquor dosage. Therefore, according to the statistical bar graph, the dose for the test sample used in third experiment is set to 200µl; wherein the average drunkenness time of the rats fed with 200µl Luzhou-flavor liquor is 63.25±3.36 min. During the fourth experiment, the rats in each of the aforesaid groups are fed with the corresponding test samples of 200µl. Then, in order to determine the drunkenness time of rats in each of the groups, the rats are put on a balance beam for completing a beam-balance test, respectively. Therefore, the errors (overturn and/or misstep) occurring as the rats walk along the balance beam can be counted and recorded.

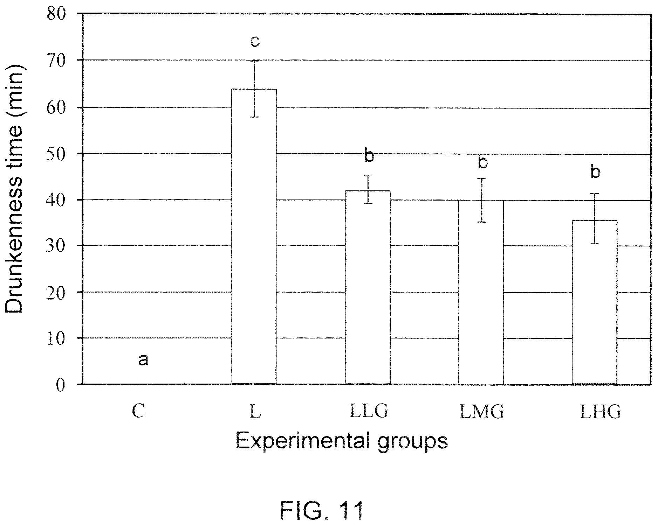

Please refer to FIG. 11, there is shown a statistical bar graph of drunkenness time versus experimental groups. As FIG. 11 shows, the drunkenness time of the rats in LLG group, LMG group and LHG group are obviously less than the drunkenness time of the rats in L group. Thus, the experimental results coming from FIG. 11 has proved that, the rats fed with the alcohol drink composition of LLG group would sober up after a longest drunkenness time of 42 minutes has been passed.

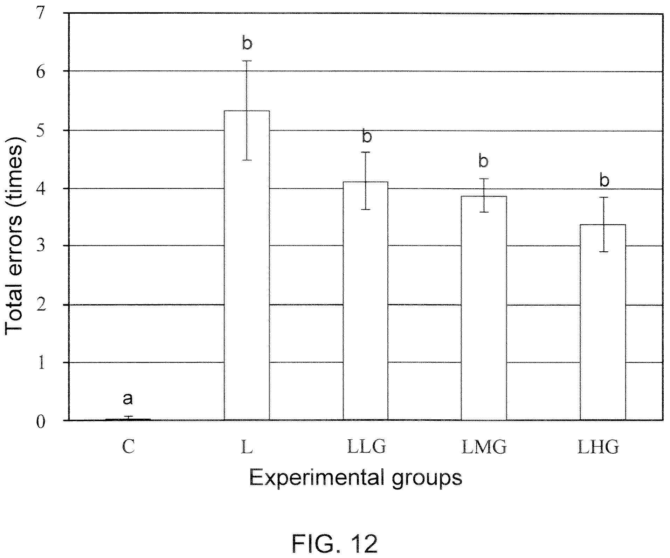

In addition, please refer to FIG. 12, where a statistical bar graph of total errors versus experimental groups is shown. From FIG. 12, it can easily find that, the performances on the total errors (overturn + misstep) presented by the rats in LLG group, LMG group and LHG group are obviously superior to the rats in L group. Therefore, the experimental results of the beam-balance test has proved that, the rats fed with the alcohol drink composition of LLG group, LMG group and LHG group can still perform good dynamic-balance ability.

### [Fifth Experiment]

After finishing the fourth experiment, the inventor of the present invention continuously takes the Maotai liquor made by using sorghum and wheat as raw material to be the alcohol drink in order to carry out a fifth experiment. Herein, it needs to further explain that the Maotai liquor comes from Bacchus Winery located in Guizhou of China, and the alcohol by volume (ABV) of the Maotai liquor is 53%.

The same to above-presented experiments, 10-week old ICR rats are selected to be test animals in the fifth experiment, and the rats are divided into 5 groups by 8 rats per group. The 5 groups are as follows:
(1) Control (C) group: the rats in C group are fed with 200µl pure water by using rat feeding tubes.
(2) Maotai liquor (M) group: the rats in M group are fed with 200µl Maotai liquor by using rat feeding tubes.
(3) 1-fold dose (MLG) group: the rats in MLG group are fed with a MLG test sample of 200µl by using rat feeding tubes. To obtain the MLG test sample, an alcohol drink of 600ml Maotai liquor is firstly mixed with 6.6 mg gold flakes, and then the mixture is stirred for I hour. So that, the MLG test sample used in MLG group contains the gold flakes of 6.6 mg/600mL.
(4) 3-fold dose (MMG) group: the rats in MMG group are fed with a MMG test sample of 200µl by using rat feeding tubes. For fabricating the MMG test sample, 19.8 mg gold flakes are mixed into an alcohol drink of 600ml Maotai liquor, and then the mixture is stirred for 1 hour. So that, the MMG test sample used in MMG group contains the gold flakes of 19.8 mg/600mL.
(5) 6-fold dose (MHG) group: the rats in MHG group are fed with a MHG test sample of 200µl by using rat feeding tubes. To obtain the MHG test sample, an alcohol drink of 600ml Maotai liquor is firstly mixed with 39.6 mg gold flakes, and then the mixture is stirred for 1 hour. So that, the MHG test sample used in MHG group contains the gold flakes of 39.6 mg/600mL.

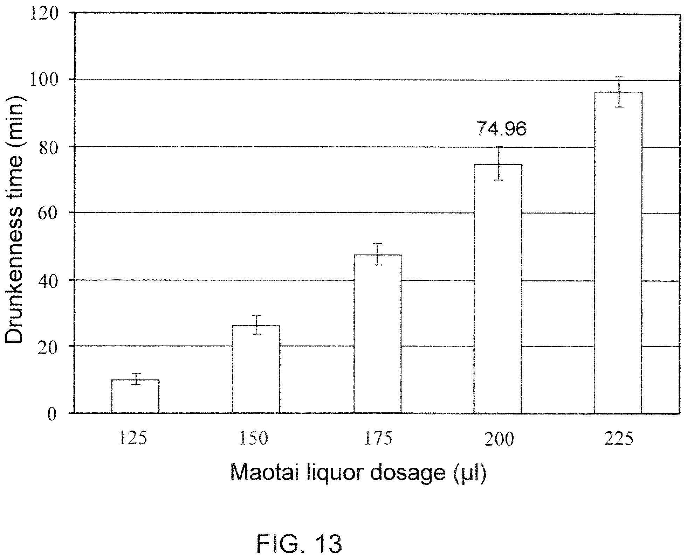

Several rats are fed with different dosages of Maotai liquor before starting the formal experiment, such that a statistical bar graph of drunkenness time versus Maotai liquor dosage is therefore produced in FIG. 13. As FIG. 13 shows, the drunkenness time of test rats raises with the increase of the fed Maotai liquor dosage. Therefore, according to the statistical bar graph, the dose for the test sample used in third experiment is set to 200µl; wherein the average drunkenness time of the rats fed with 200µl Maotai liquor is 74.96±5.03 min. During the fifth experiment, the rats in each of the aforesaid groups are fed with the corresponding test samples of 200µl. Then, in order to determine the drunkenness time of rats in each of the groups, the rats are put on a balance beam for completing a beam-balance test, respectively. Therefore, the errors (overturn and/or misstep) occurring as the rats walk along the balance beam can be counted and recorded.

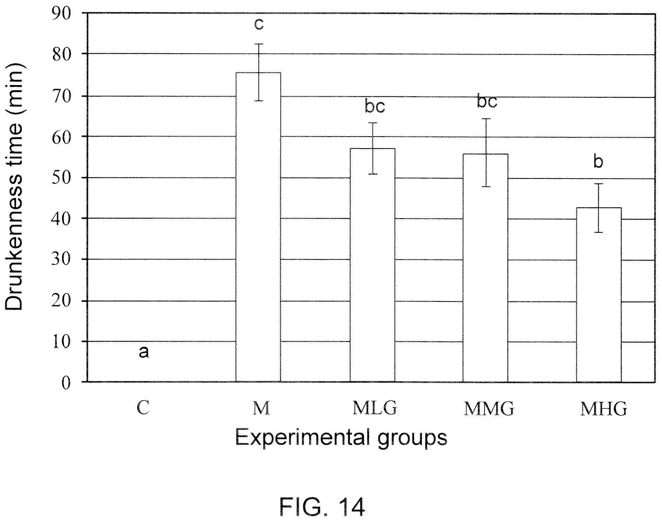

Please refer to FIG. 14, there is shown a statistical bar graph of drunkenness time versus experimental groups. As FIG. 14 shows, the drunkenness time of the rats in MLG group, MMG group and MHG group are obviously less than the drunkenness time of the rats in M group. Thus, the experimental results coming from FIG. 14 has proved that, the rats fed with the alcohol drink composition of MMG group would sober up after a longest drunkenness time of 57 minutes has been passed.

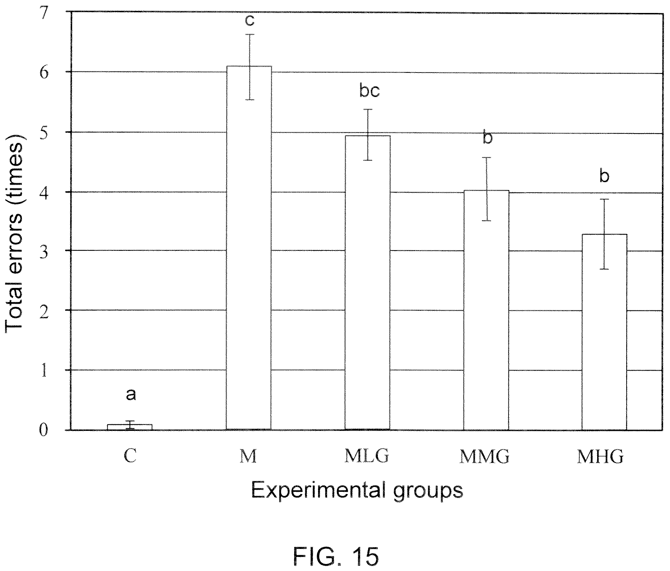

In addition, please refer to FIG. 15, where a statistical bar graph of total errors versus experimental groups is shown. From FIG. 15, it can easily find that, the performances on the total errors (overturn + misstep) presented by the rats in MLG group, MMG group and MHG group are obviously superior to the rats in M group. Therefore, the experimental results of the beam-balance test has proved that, the rats fed with the alcohol drink composition of MLG group, MMG group and MHG group can still perform good dynamic-balance ability.

### [Sixth Experiment]

After finishing the fifth experiment, the inventor of the present invention continuously takes the Shaoxing liquor made by using glutinous rice and wheat as raw material to be the alcohol drink in order to carry out a fifth experiment. Herein, it needs to further explain that the Shaoxing liquor comes from Zhejiang Guyuelongshan Shaoxing Wine Co., Ltd located in Zhejiang of China, and the alcohol by volume (ABV) of the Shaoxing liquor is 15%.

The same to above-presented experiments, 10-week old ICR rats are selected to be test animals in the sixth experiment, and the rats are divided into 5 groups by 8 rats per group. The 5 groups are as follows:
(1) Control (C) group: the rats in C group are fed with 650µl pure water by using rat feeding tubes.
(2) Shaoxing liquor (X) group: the rats in X group are fed with 650µl Shaoxing liquor by using rat feeding tubes.
(3) 1-fold dose (XLG) group: the rats in XLG group are fed with a XLG test sample of 650µl by using rat feeding tubes. To obtain the XLG test sample, an alcohol drink of 600ml Shaoxing liquor is firstly mixed with 6.6 mg gold flakes, and then the mixture is stirred for 1 hour. So that, the XLG test sample used in XLG group contains the gold flakes of 6.6 mg/600mL.
(4) 3-fold dose (XMG) group: the rats in XMG group are fed with a XMG test sample of 650µl by using rat feeding tubes. For fabricating the XMG test sample, 19.8 mg gold flakes are mixed into an alcohol drink of 600ml Shaoxing liquor, and then the mixture is stirred for 1 hour. So that, the XMG test sample used in XMG group contains the gold flakes of 19.8 mg/600mL.
(5) 6-fold dose (XHG) group: the rats in XHG group are fed with a XHG test sample of 650µl by using rat feeding tubes. To obtain the XHG test sample, an alcohol drink of 600ml Shaoxing liquor is firstly mixed with 39.6 mg gold flakes, and then the mixture is stirred for 1 hour. So that, the XHG test sample used in XHG group contains the gold flakes of 39.6 mg/600mL.

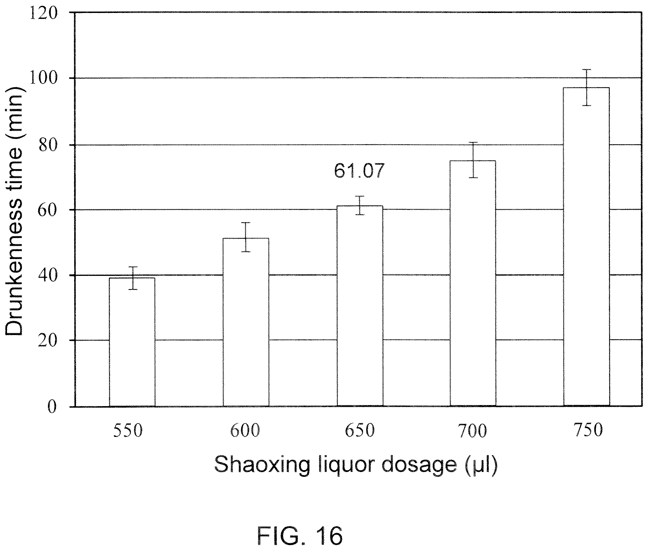

Several rats are fed with different dosages of Shaoxing liquor before starting the formal experiment, such that a statistical bar graph of drunkenness time versus Shaoxing liquor dosage is therefore produced in FIG. 16. As FIG. 16 shows, the drunkenness time of test rats raises with the increase of the fed Shaoxing liquor dosage. Therefore, according to the statistical bar graph, the dose for the test sample used in third experiment is set to 650µl; wherein the average drunkenness time of the rats fed with 650µl Shaoxing liquor is 61.07±8.0 min. During the sixth experiment, the rats in each of the aforesaid groups are fed with the corresponding test samples of 650µl. Then, in order to determine the drunkenness time of rats in each of the groups, the rats are put on a balance beam for completing a beam-balance test, respectively. Therefore, the errors (overturn and/or misstep) occurring as the rats walk along the balance beam can be counted and recorded.

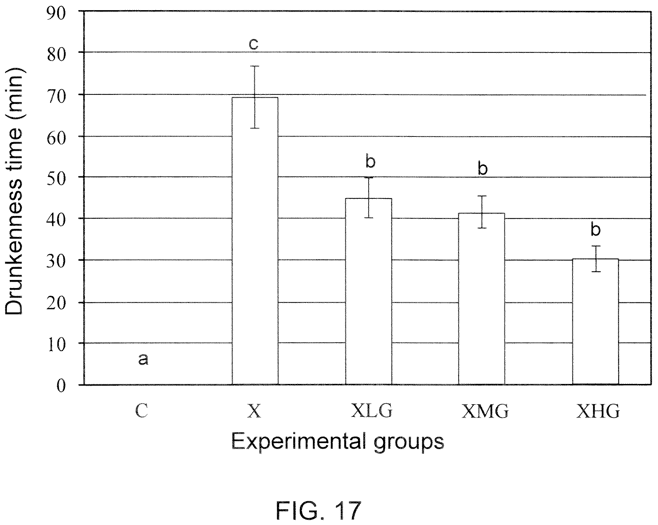

Please refer to FIG. 17, there is shown a statistical bar graph of drunkenness time versus experimental groups. As FIG. 17 shows, the drunkenness time of the rats in XLG group, XMG group and XHG group are obviously less than the drunkenness time of the rats in X group. Thus, the experimental results coming from FIG. 17 has proved that, the rats fed with the alcohol drink composition of XMG group would sober up after a longest drunkenness time of 45 minutes has been passed.

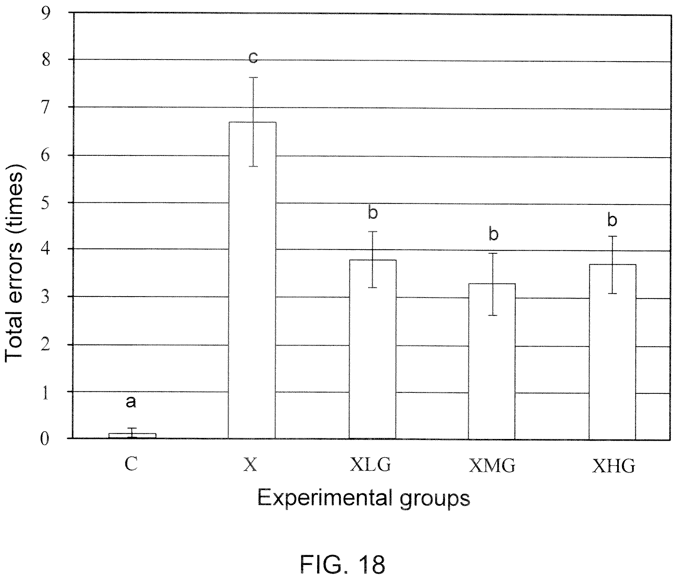

In addition, please refer to FIG. 18, where a statistical bar graph of total errors versus experimental groups is shown. From FIG. 18, it can easily find that, the performances on the total errors (overturn + misstep) presented by the rats in XLG group, XMG group and XHG group are obviously superior to the rats in X group. Therefore, the experimental results of the beam-balance test has proved that, the rats fed with the alcohol drink composition of XLG group, XMG group and XHG group can still perform good dynamic-balance ability.

Besides, the above-presented experimental results also prove that the optimal mix ratio for the gold flakes is ranged between 6.6 (6.6 x 1) mg/600mL and 66 (6.6 x 10) mg/600mL. Moreover, the user can mix the colloidal gold into the said alcohol drink by the mix ratio of 50:1∼50:10 for obtaining the alcoholic drink composition, wherein the obtained alcoholic drink composition also includes the functionality to shorten drunkenness time.

Therefore, through above descriptions, the alcoholic drink composition having functionality to shorten drunkenness time proposed by the present invention has been introduced completely and clearly; in summary, the present invention mixes a plurality of gold flakes into an alcoholic drink with a specific mix ration for fabricating alcoholic drink composition having functionality to shorten drunkenness time. Taking sorghum liquor as an exemplary alcoholic drink composition, wherein the gold flakes are mixed into the sorghum liquor by the mix ratio ranged between 6.6 mg/600mL and 66 mg/600mL. Therefore, when a user drinks the sorghum liquor mixed with the gold flakes, the user would sober up after a longest drunkenness time of 59 minutes passed, without additionally taking any other anti-alcoholic products.

## Claims

1. An alcoholic drink composition for shortening drunkenness time, comprising:
an alcohol drink; and
a plurality of gold flakes formed by a plurality of gold nanoparticles;
wherein the gold flakes are mixed into the alcohol drink by a specific mixing ratio, and the specific mixing ratio being ranged between 6.6 mg/600ml to 66 mg/600ml;
wherein the alcoholic drink composition is able to shorten the drunkenness time by at least 20 minutes.

2. The alcoholic drink composition of claim 1, wherein the gold nanoparticles is made of 99.99% pure gold through a physical vapor deposition (PVD) process, and the gold nanoparticles having a specific dimension size ranged between 2 nm and 30 nm.

3. The alcoholic drink composition of claim 1, wherein the gold flakes have a specific thickness ranged between 20 nm and 100 nm.

4. The alcoholic drink composition of claim 1, wherein the manufacturing material of the alcohol drink is selected from the group consisting of: grain, cereal, wheat, and fruit.

## Patentansprüche

1. Alkoholische Getränkzusammensetzung zum Verkürzen der Dauer der Trunkenheit, die umfasst:
ein alkoholisches Getränk; und
mehrere Goldflocken, die durch mehrere Goldnanopartikel gebildet sind;
wobei die Goldflocken unter Verwendung eines spezifischen Mischverhältnisses in das alkoholische Getränk gemischt werden und das spezifische Mischverhältnis im Bereich zwischen 6,6 mg/600 ml und 66 mg/600 ml liegt;
wobei die alkoholische Getränkzusammensetzung in der Lage ist, die Dauer der Trunkenheit um zumindest 20 Minuten zu verkürzen.

2. Alkoholische Getränkzusammensetzung nach Anspruch 1, wobei die Goldnanopartikel mithilfe eines Prozesses der physikalischen Dampfabscheidung (PVD) aus 99,99 % reinem Gold hergestellt sind und die Goldnanopartikel eine spezifische Dimensionsgröße im Bereich zwischen 2 nm und 30 nm aufweisen.

3. Alkoholische Getränkzusammensetzung nach Anspruch 1, wobei die Goldflocken eine spezifische Dicke zwischen 20 nm und 100 nm aufweisen.

4. Alkoholische Getränkzusammensetzung nach Anspruch 1, wobei das Herstellungsmaterial des alkoholischen Getränks aus der Gruppe ausgewählt ist, bestehend aus: Getreide, Kornfrucht, Weizen und Früchten.

## Revendications

1. Composition de boisson alcoolisée pour raccourcir la durée de l'état d'ébriété, comprenant :
une boisson alcoolisée ; et
une pluralité de paillettes d'or formées par une pluralité de nanoparticules d'or ;
les paillettes d'or étant mélangées dans la boisson alcoolisée à un rapport de mélange spécifique, et le rapport de mélange spécifique étant compris dans la plage allant de 6,6 mg/600 ml à 66 mg/600 ml ;
la composition de boisson alcoolisée étant apte à raccourcir la durée de l'état d'ébriété d'au moins 20 minutes.

2. Composition de boisson alcoolisée selon la revendication 1, dans laquelle les nanoparticules d'or sont faites de 99,99 % d'or pur par un traitement de dépôt physique en phase vapeur (PVD), et les nanoparticules d'or ayant une dimension spécifique comprise entre 2 nm et 30 nm.

3. Composition de boisson alcoolisée selon la revendication 1, dans laquelle les paillettes d'or ont une épaisseur spécifique comprise entre 20 nm et 100 nm.

4. Composition de boisson alcoolisée selon la revendication 1, dans laquelle la matière de production de la boisson alcoolisée est choisie parmi le groupe constitué de : grain, céréale, blé et fruit.
